# EUROPÄISCHE PATENTANMELDUNG

(11) **EP 4 218 948 A1**
(43) Veröffentlichungstag der Anmeldung: **02.08.2023**
(21) Anmeldenummer: 22153897.8
(22) Anmeldetag: 28.01.2022
(51) Int. Cl.: A62B 35/00, E04G 21/32, F16G 11/06

(54) **SEILANKER EINER SEILHALTEVORRICHTUNG**

(71) Anmelder: APP Dachgarten GmbH, 85049 Ingolstadt (DE)
(72) Erfinder: Csizmadia, Peter, 85049 Ingolstadt (DE)
(74) Vertreter: Gosdin, Carstensen & Partner Patentanwälte Partnerschaftgesellschaft mbB

(57) **Zusammenfassung**

Die Erfindung betrifft einen Seilanker einer Seilhaltevorrichtung. Um diesen so zu gestalten, dass er in verbesserter Weise universell einsetzbar ist und für verschiedene Führungen des Sicherungsteils günstig montiert werden kann, umfasst der Seilanker gemäß der vorgeschlagenen Lösung einen quaderförmigen Grundkörper (41), eine erste Durchtrittsbohrung (42) für ein Sicherungsseil (23), die in eine erste Oberfläche (43) des Grundkörpers (41) eingearbeitet ist, eine zweite Durchtrittsbohrung (44) für das Sicherungsseil (23), die in eine zweite Oberfläche (45) des Grundkörpers (41) eingearbeitet ist, wobei die zweite Oberfläche (45) von der ersten Oberfläche (43) verschieden ist und wobei sich die beiden Durchtrittsbohrungen (42, 44) nicht schneiden, eine erste Gewindebohrung (46), die in den Grundkörper (41) eingearbeitet ist und deren Achse (B) die Achse (D) der ersten Durchtrittsbohrung (42) rechtwinkelig schneidet, und eine zweite Gewindebohrung (47), die in den Grundkörper (41) eingearbeitet ist und deren Achse (C) die die Achse (E) der zweiten Durchtrittsbohrung (44) rechtwinkelig schneidet.

## Beschreibung

Die Erfindung betrifft einen Seilanker einer Seilhaltevorrichtung.

Aus der WO 2014/127760 A1 ist eine Absturzsicherung bekannt, die dazu dient, Personen, die beispielsweise auf einem Dach arbeiten, gegen einen Absturz zu sichern. Derartige Seilhaltevorrichtungen stellen eine Absturzsicherung dar, bei der beispielsweise auf einem Stützenfuß eine Stütze und auf dieser wiederum ein gattungsgemäßer Stützenkopf montiert wird, der das Sicherungsseil hält. Der Stützenfuß wird dabei auf der Oberfläche eines Daches eines Gebäudes fixiert, was insbesondere dadurch erfolgen kann, dass der Fuß mittels Schrauben oder ähnlichen Befestigungsmitteln auf dem Dach festgelegt wird. Der Stützenfuß trägt dann die zugehörige Stütze und diese wiederum den Stützenkopf.

Im Endbereich eines jeden Seilsystems, welches bei der genannten Absturzsicherung zum Einsatz kommt, wird ein Endstück (Anker) montiert. Hierdurch wird verhindert, dass ein zur Absturzsicherung notwendiges Drahtseil durch den jeweiligen Stützenkopf hindurchrutscht; ferner wird der erste und der letzte überfahrbare Stützenkopf durch den Seilanker als Anfangs- und Endpunkt eines Seilsystems gesichert.

Der Erfindung liegt die **Aufgabe** zugrunde, einen Seilanker so zu gestalten, dass er in verbesserter Weise universell einsetzbar ist und für verschiedene Führungen des Sicherungsteils günstig montiert werden kann.

Die **Lösung** dieser Aufgabe durch die Erfindung sieht vor, dass der Seilanker umfasst:
- einen quaderförmigen Grundkörper,
- eine erste Durchtrittsbohrung für ein Sicherungsseil, die in eine erste Oberfläche des Grundkörpers eingearbeitet ist,
- eine zweite Durchtrittsbohrung für das Sicherungsseil, die in eine zweite Oberfläche des Grundkörpers eingearbeitet ist, wobei die zweite Oberfläche von der ersten Oberfläche verschieden ist und wobei sich die beiden Durchtrittsbohrungen nicht schneiden,
- eine erste Gewindebohrung, die in den Grundkörper eingearbeitet ist und deren Achse die Achse der ersten Durchtrittsbohrung rechtwinkelig schneidet, und
- eine zweite Gewindebohrung, die in den Grundkörper eingearbeitet ist und deren Achse die die Achse der zweiten Durchtrittsbohrung rechtwinkelig schneidet.

Der quaderförmige Grundkörper ist bevorzugt als Würfel ausgebildet.

Die Durchtrittsbohrungen weisen bevorzugt eine zylindrische Form auf.

Alle Seitenlängen des quaderförmigen Grundkörpers liegen bevorzugt zwischen 20 mm und 40 mm, besonders bevorzugt zwischen 25 mm und 35 mm.

In den Gewindebohrungen können zur Fixierung des Sicherungsseils Madenschrauben eingeschraubt sein.

Der Übergang von der Oberfläche des Grundkörpers in die Durchtrittsbohrung können mit einer Ausrundung versehen sein. Weiterhin können auch die Eckenbereiche des Grundkörpers mit Ausrundungen versehen sein.

Der Grundkörper besteht bevorzugt aus hochfestem Material, insbesondere aus korrosionsfreiem Edelstahl.

Die Achsen der beiden Durchtrittsbohrungen, die in den Grundkörper eingebracht sind, verlaufen demgemäß windschief (sie sind also nicht parallel zueinander und schneiden sich auch nicht), wobei die Achsen in der Projektion aufeinander bevorzugt rechtwinklig zueinander orientiert sind. Allerdings können auch Abweichungen vom rechten Winkel vorgesehen werden.

Mit der vorgeschlagenen Lösung werden Elemente für ein Absturzsicherungs-System bereitgestellt, welches mehrere Komponenten aufweist und variable Anwendungsmöglichkeiten hat. Es eignet sich zum Schutz von Personen, die auf Dächern oder sonstigen höher liegenden Ebenen arbeiten müssen.

Generell möglich ist es, dass Absturzsicherungen die jeweilige Dachhaut zum Zweck der Befestigung durchdringen dürfen, was in der Regel im Lauf der Zeit zu Mängeln und Schäden an der Unterkonstruktion führt, die teilweise nur mit sehr hohem technischen und wirtschaftlichen Aufwand zu beseitigen sind. Andererseits sind sichere Befestigungen an massiven Bauteilen bei entsprechendem statischen Nachweis durchaus möglich, ohne mit einer Dachhautabdichtung in Konflikt zu geraten.

Mit der vorgeschlagenen Lösung wird es möglich, den Seilanker einfach und effektiv einzusetzen und das Seil zu sichern. Darüber hinaus können auch, wie sich aus den Ausführungen unten ergeben wird, günstige Führungen des Sicherungsteils sowie Umlenkung desselben in einfacher Weise bewerkstelligt werden.

Vorteilhaft ist, dass die vorgeschlagene Lösung auch Gesichtspunkte einer die Natur schonenden Konstruktionsweise bei gleichzeitiger Wirtschaftlichkeit zur Schonung wertvoller Rohstoffe berücksichtigt. Gleichzeitig werden natürlich aber auch die wichtigen Aspekte der Benutzer von Absturz-Sicherungsanlagen beachtet. Jeder Benutzer sichert sich mit der Absturzsicherung bei notwendigen Arbeiten in der Höhe. Sehr vorteilhaft ist dabei der einfache Aufbau und eine einfache Handhabung der Sicherungsanlage. Obwohl jeder professionelle Benutzer eine auf das System bezogene Schulung erhält, wird die Möglichkeit eines eventuell folgenschweren Anwendungsfehlers durch eine einfach zu handhabende Konstruktion wesentlich reduziert oder gar ausgeschlossen. Das vorgeschlagene System bietet also eine einfache Handhabung, so dass Fehlerquellen minimiert werden.

Jeder einzelne Anschlagpunkt des Sicherungssystems stellt einen wesentlichen Bestandteil eines gesamten Absturz-Sicherungssystems dar und besteht aus mehreren Einzelelementen, die zu ihrer Wirksamkeit mit verschiedenen Teilen des gleichen Systems je nach Bedarf und technischer Notwendigkeit zusammengefügt werden können. Für ein in sich geschlossenes oder auch offenes Absturz-Sicherungssystem werden typischerweise statisch nachgewiesene und geprüfte Stützen (Pfosten eines Seilsystems) benötigt, welche mit Stahlseilen verbunden sind.

In den Figuren sind Ausführungsbeispiele der Erfindung dargestellt.
- Fig. 1: zeigt in perspektivischer Darstellung einen Stützenfuß einer Seilhaltevorrichtung (Absturzsicherung),
- Fig. 2: zeigt die Draufsicht auf den Stützenfuß,
- Fig. 3: zeigt in perspektivischer Darstellung den Stützenfuß, der mit zwei Befestigungselementen (Schrauben bzw. Dübeln) an seiner Unterseite auf einem (nicht dargestellten) Dach festgelegt ist und an dem auf seiner Oberseite eine Stütze befestigt ist,
- Fig. 4: zeigt in perspektivischer Darstellung den Stützenfuß, der mit einem einzigen Befestigungselement (Schraube) an seiner Unterseite auf einem (nicht dargestellten) Dach festgelegt ist und an dem auf seiner Oberseite eine Stütze befestigt ist,
- Fig. 5: zeigt in perspektivischer Darstellung einen Stützenkopf, aus einer ersten Ansicht betrachtet,
- Fig. 6: zeigt in perspektivischer Darstellung den Stützenkopf gemäß Figur 5, aus einer zweiten Ansicht betrachtet,
- Fig. 7: zeigt den Schnitt durch das Rohrelement des Stützenkopfs, in dem ein Sicherungsseil festgelegt ist,
- Fig. 8: zeigt in perspektivischer Darstellung den Stützenkopf, an dem ein Verbindungselement befestigt ist,
- Fig. 9: zeigt die Draufsicht auf den Stützenkopf mit festgelegtem Sicherungsseil,
- Fig. 10: zeigt in perspektivischer Darstellung einen Seilanker,
- Fig. 11: zeigt den Einsatz des Seilankers an einer Absturzsicherung, von der die Stütze samt Stützenkopf sowie das Sicherungsseil zu sehen ist,
- Fig. 12: zeigt in perspektivischer Darstellung ein Sicherungsseil, das mit dem Seilanker verbunden ist,
- Fig. 13: zeigt in perspektivischer Darstellung einen weiteren Einsatzfall des Seilankers an einer Absturzsicherung, von der die Stütze samt Stützenkopf sowie das Sicherungsseil zu sehen ist,
- Fig. 14: zeigt in perspektivischer Darstellung einen Stützenfuß einer Seilhaltevorrichtung gemäß einer alternativen Ausgestaltung,
- Fig. 15: zeigt in perspektivischer Darstellung einen Stützenfuß einer Seilhaltevorrichtung gemäß einer weiteren Ausgestaltung und
- Fig. 16: zeigt den Stützenfuß gemäß Fig. 15 in der Seitenansicht mit Angabe der Ausrichtung der Stützen, die die Grundplatte mit der Anschlussplatte miteinander verbinden.

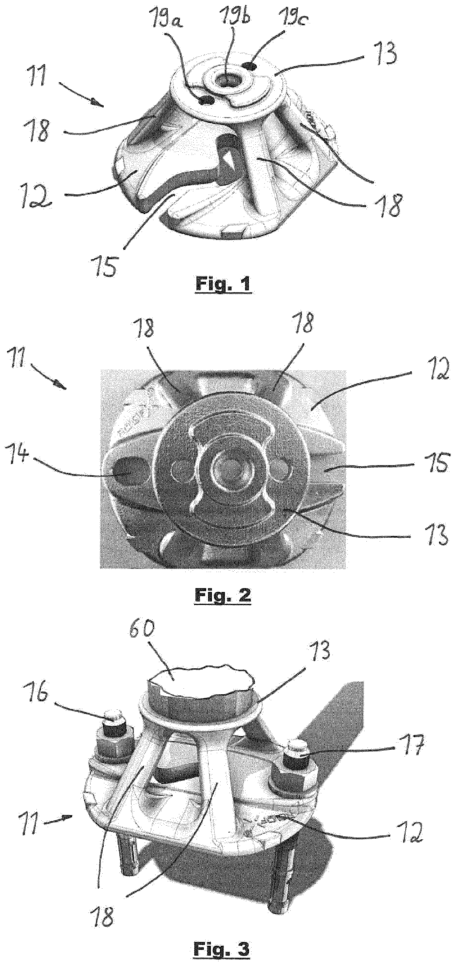

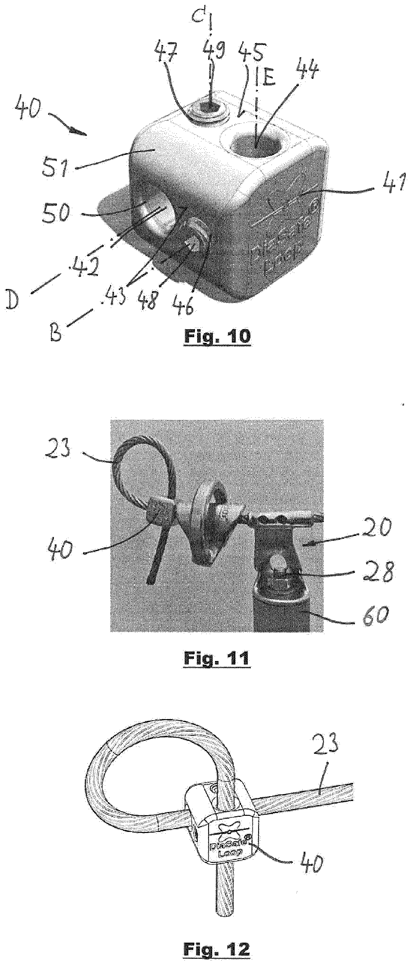

In Figur 1 und 2 ist ein Stützenfuß 11 zu sehen, der an einem nicht dargestellten Untergrund, beispielsweise in Form eines Flachdaches, befestigt wird. Wenn in der vorliegenden Beschreibung und in den Ansprüchen von einer oberen und einer unteren Position die Rede ist, bezieht sich dies auf die bestimmungsgemäße Verwendung der beschriebenen Elemente, d. h. der Stützenfuß 11 ist unten mit der Oberfläche des Daches verbunden, während an seiner Oberseite eine Stütze 60 (s. Figur 3 und 11) angeordnet ist; am oberen Ende der Stütze 60 ist dann ein Stützenkopf 20 angebracht, welcher ein Sicherungsseil 23 trägt.

Der Stützenfuß 11 weist unten eine Grundplatte 12 und oben eine Anschlussplatte 13 (für eine den Stützenkopf 20 tragende Stütze) auf. Die Verbindung zwischen Grundplatte 12 und Anschlussplatte 13 wird durch Stützen 18 hergestellt. Die Grundplatte 12 weist zwei Ausnehmungen 14 und 15 auf, nämlich eine erste Ausnehmung 14 in Form eines Langlochs und eine zweite Ausnehmung 15 in Form eines Schlitzes, der sich vom äußeren Rand der Grundplatte 12 radial bis ins Zentrum derselben erstreckt.

Die Ausnehmungen 14 und 15 dienen dazu, im gegebenen Falle den Durchtritt von Verbindungselementen 16 bzw. 17 zu ermöglichen, welche in Figur 3 dargestellt sind. Bei der Lösung gemäß Figur 3 wird die Grundplatte 12 und somit der Stützenfuß 11 demgemäß mit den beiden Verbindungselementen 16 und 17 bewerkstelligt; die Verbindungselemente 16 und 17 sind im Ausführungsbeispiel als Bolzen mit Gewinde ausgebildet, mit denen die Grundplatte 12 an der Oberfläche des Daches befestigt werden kann, wobei die Bolzen im Dach verankert sind.

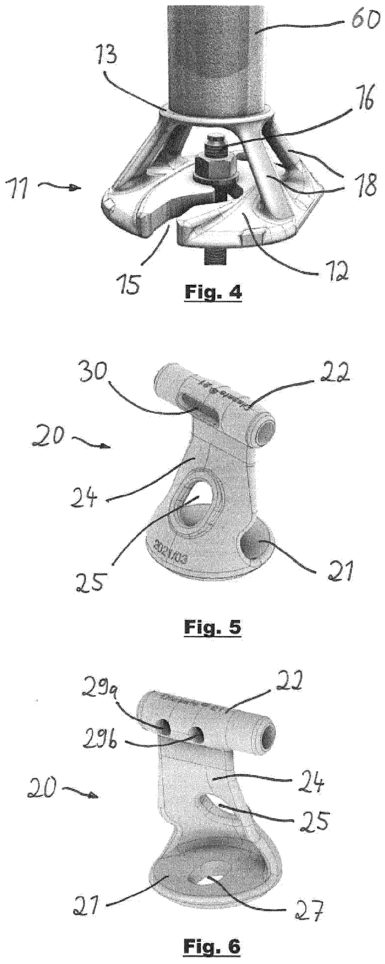

Allerdings besteht auch die Möglichkeit, die Befestigung des Stützenfußes 11 mittels nur eines Verbindungselements 16 zu bewerkstelligen, wie es Figur 4 zeigt. Hierzu kann bei gesetztem Bolzen der Stützenfuß 11 aufgrund der Ausbildung der zweiten Ausnehmung 15 aufgeschoben werden, d. h. er wird vom radial äußeren Rand der Grundplatte 12 in die Mitte derselben eingeschoben. Der abschnittsweise bogenförmige Verlauf des Schlitzes erschwert ein unbeabsichtigtes Lösen bzw. Herausrutschen des Stützenfußes vom Bolzen.

Wie in Figur 2 zu sehen ist, befinden sich drei Ausnehmungen 19a, 19b und 19c in der Anschlussplatte 13, so dass hier die Möglichkeit des Anschraubens eines Anbauteils besteht, insbesondere einer Stütze 60 (s. Fig. 3).

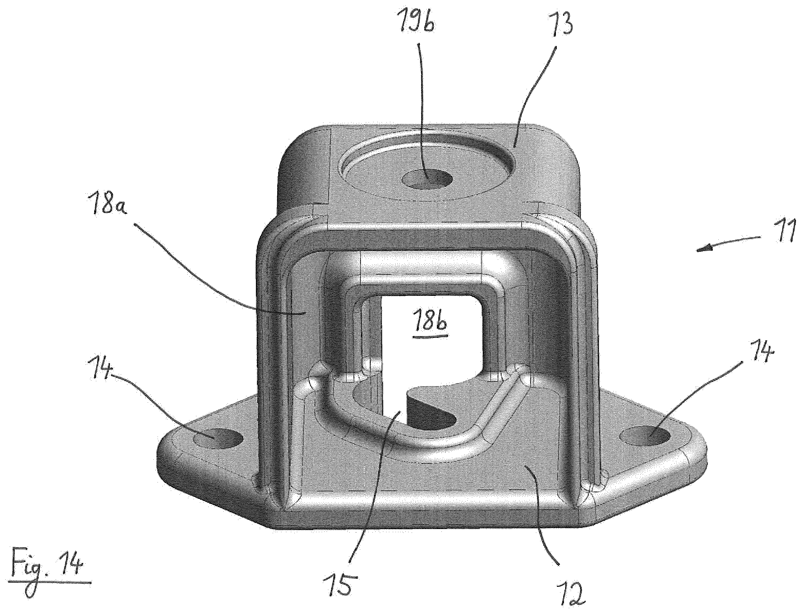

Eine alternative Ausgestaltung des Stützenfußes 11 geht aus Figur 14 hervor. Der wesentliche Unterschied zu der vorstehend beschriebenen Lösung (mit den Stützen 18) besteht hier darin, dass die Verbindung zwischen Grundplatte 12 und Anschlussplatte 13 durch eine Verbindungsstruktur 18a gebildet wird (bevorzugt mit plattenartigen Wänden), die im Ausführungsbeispiel im Wesentlichen würfel- oder quaderförmig ausgebildet ist. Dabei ist ein Durchbruch 18b an der Seite der Verbindungsstruktur 18a ausgebildet, wo die zweite Ausnehmung 15 beginnt. Im Ausführungsbeispiel fehlt die Wandung der würfel- oder quaderförmigen Struktur, die dem Durchbruch 18b gegenüberliegt. Ferner sind hier zwei erste Ausnehmungen 14 vorgesehen, über die der Stützenfuß 11 bei Bedarf mit zwei Verbindungselementen 16 und 17 befestigt werden kann, alternativ aber auch über die zweite Ausnehmung 15 mittels nur eines Verbindungselements 16 (entsprechend Figur 4). Der Durchbruch 18b ermöglicht das seitliche Einschieben eines Verbindungselements (Bolzens). Durch den Einsatz der würfel- oder quaderförmigen Struktur 18a ergibt sich eine besonders stabile Konstruktion des Stützenfußes 11, so dass eine bessere Lastaufnahme gewährleistet ist.

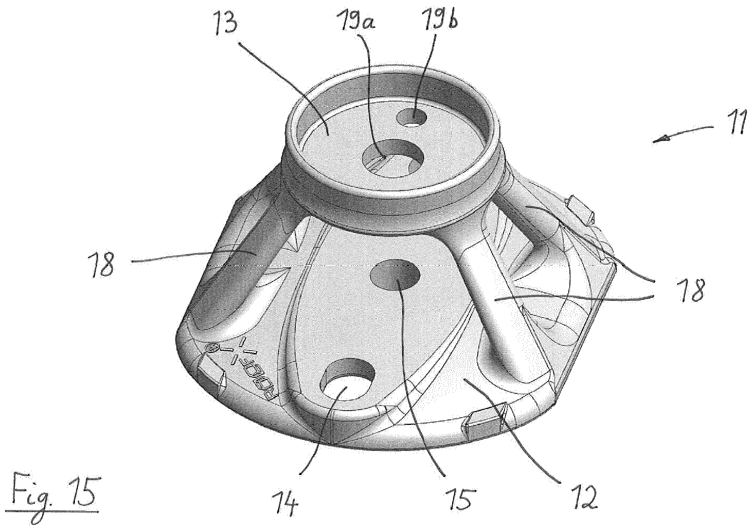

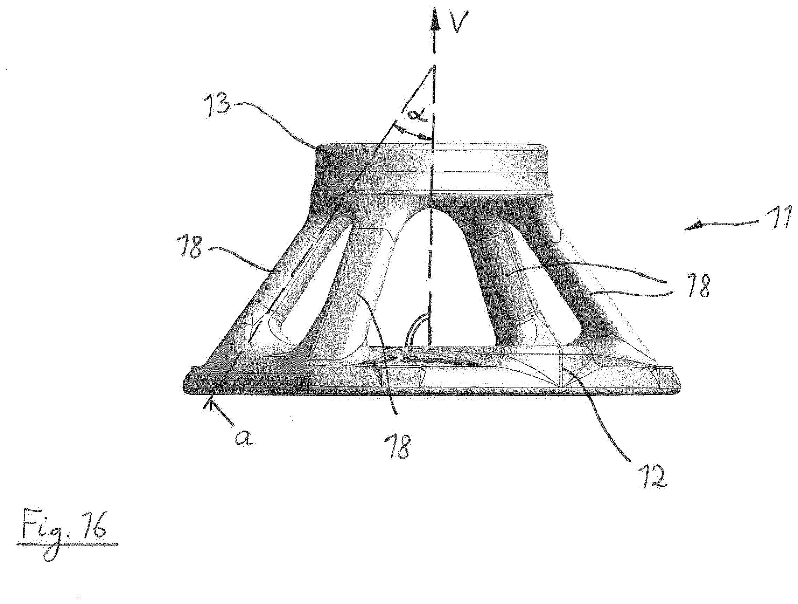

Eine nochmals andere Ausgestaltung des Stützenfußes 11 geht aus Figur 15 und Fig. 16 hervor. Der Stützenfuß 11 ist hier ähnlich wie in Figur 1 ausgestaltet, wobei sich die Bezugszeichen entsprechen. Bei dem in Figur 15 dargestellten Stützenfuß ist allerdings die zweite Ausnehmung 15 nicht schlitzförmig gestaltet, sondern als einfache Bohrung.

In Fig. 16 ist zu erkennen, wie die Stützen 18 angeordnet sind, um die Grundplatte 12 mit der Anschlussplatte 13 zu verbinden. Zu erkennen ist, dass die Stützen 18 über ihre wesentliche Erstreckung stangen- bzw. stabförmig ausgebildet sind und eine Längsachse a haben. Auf der Grundplatte 12 ist eine Oberflächennormale V eingetragen, die bei bestimmungsgemäßer Benutzung des Stützenfußes 11 der vertikalen Richtung entspricht. Wie zu erkennen ist, schließt die Längsachse a jeder der Stützen 18 mit der Oberflächennormalen einen Winkel α ein, der im Ausführungsbeispiel bei ca. 35° liegt. Generell haben sich Werte zwischen 15° und 55° bewährt.

Im Falle des Absturzes einer Person, die am beschriebenen Sicherungssystem angeschlagen ist, können somit die beim Fall entstehenden Kräfte verbessert abgefangen (bzw. gedämpft) werden, d. h. der Stützenfuß ist stabil und dennoch elastisch und kann infolge seiner Verformung größere Kräfte abfangen, ohne zu brechen.

Der beschriebene Stützenfuß 11 kann in allen Fällen einstückig ausgebildet sein, beispielsweise als Gussteil.

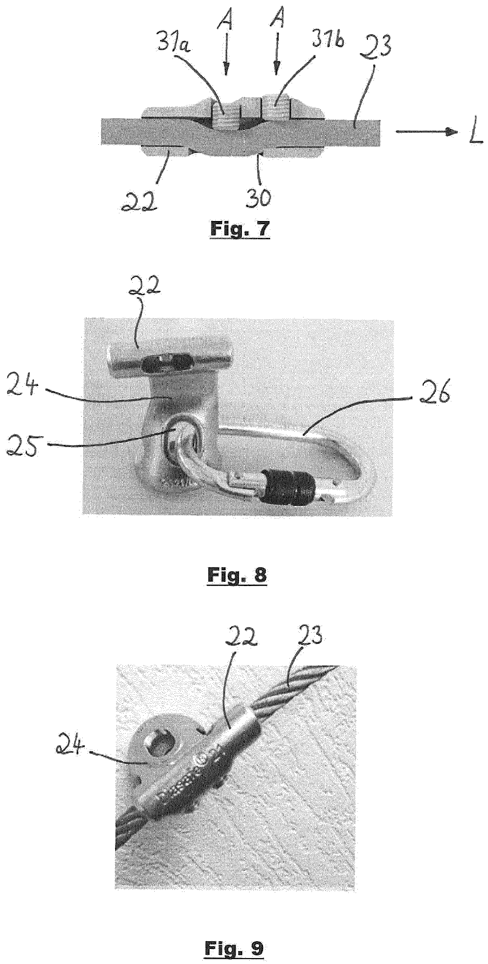

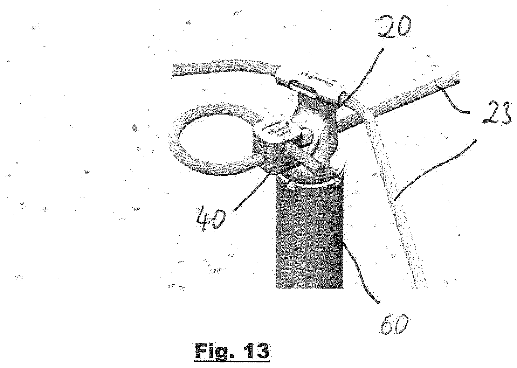

Die Ausbildung des Stützenkopfs 20 geht aus den Figuren 5 bis 9 hervor. Hieraus ergibt sich, dass der Stützenkopf 20 unten eine Basisplatte 21 und oben ein Rohrelement 22 zur Aufnahme eines Sicherungsseils 23 aufweist. Die Verbindung zwischen Basisplatte 21 und Rohrelement 22 erfolgt über eine Wandung 24, die mit einer Ausnehmung 25 versehen ist. Die Ausnehmung 25 macht den Stützenkopf 20 universeller einsetzbar, d. h. er muss nicht zwangsläufig am oberen Ende einer Stütze 60 (wie in Figur 11 und Figur 13 dargestellt) angeschraubt werden, sondern er kann beispielsweise auch, wie es sich aus Figur 8 ergibt, durch ein Verbindungselement 26 gesichert werden. In Figur 9 ist die weitere Möglichkeit dargestellt, nach der der Stützenkopf 20 an einer Wand festgelegt (angeschraubt) wurde.

Die Ausnehmung 27 in der Basisplatte 21 ist indes vorgesehen, um den Stützenkopf 20 auf der Oberseite der Stütze 60 mittels eines Befestigungselements (Schraube) festzulegen. Dies geht auch aus Figur 11 und Figur 13 hervor, wo diese Art der Montage illustriert ist.

Das Rohrelement 22 ist mit zwei Gewindebohrungen 29a und 29b versehen, in welche Madenschrauben 31a und 31b eingeschraubt werden können; insoweit wird auf die Figuren 5, 6 und 7 Bezug genommen. Aus Figur 7 ist ersichtlich, dass die Längsachse des Rohrelements L senkrecht von den Achsen A der Gewindebohrungen 29a und 29b geschnitten wird. Werden die Madenschrauben 31a und 31b eingeschraubt, wird somit das durch das Rohrelement 22 geführte Sicherungsseil 23 am Stützenkopf 20 zugfest fixiert.

Der ordnungsgemäße Grad der Klemmung des Sicherungsseils 23 nach Einschrauben der Madenschrauben 31a und 31b kann über eine Kontrollöffnung 30 geprüft werden, die sich der Gewindebohrung 29a und 29b gegenüberliegend am Rohrelement 22 befindet.

Weiterhin dargestellt ist in den Figuren 10 bis 13 ein Seilanker 40, der zur Sicherung des Endes des Sicherungsseils 23 zum Einsatz kommt. Der Seilanker 40 hat im Ausführungsbeispiel einen würfelförmigen Grundkörper 41, der mit einer ersten Durchtrittsbohrung 42 und einer zweiten Durchtrittsbohrung 44 versehen ist, die sich von unterschiedlichen Oberflächen des Grundkörpers 41 aus erstrecken; die erste Durchtrittsbohrung 42 erstreckt sich von der ersten Oberfläche 43 des Grundkörpers 41, während die zweite Durchtrittsbohrung 44 sich von einer zweiten Oberfläche 45 des Grundkörpers 41 aus erstreckt. Die beiden Oberflächen 43 und 45 sind zwei aufeinander folgende Oberflächen des Würfels beim Drehen desselben.

Auf den beiden Oberflächen 43 und 45 sind jeweils, benachbart zur entsprechenden Durchtrittsbohrung 42 bzw. 44, eine erste Gewindebohrung 46 sowie eine zweite Gewindebohrung 47 eingearbeitet, in die Madenschrauben 48 bzw. 49 eingeschraubt werden können. Mit der Madenschraube 48 wird ein in die Durchtrittsbohrung 44 eingeschobenes Sicherungsseil geklemmt, entsprechend wird mit der Madenschraube 49 ein in die Durchtrittsbohrung 42 eingeschobenes Sicherungsseil geklemmt.

Wie aus Figur 10 ersichtlich ist, ist hierzu die Achse B der ersten Gewindebohrung 46 senkrecht zur Achse E der zweiten Durchtrittsbohrung 44 angeordnet; entsprechend ist die Achse C der zweiten Gewindebohrung 47 senkrecht zur Achse D der ersten Durchtrittsbohrung 42 angeordnet.

Zur Erleichterung der Montage bzw. zum Schutz des Sicherungsseils 23 sind die Durchtrittsbohrungen 42, 44 mit Ausrundungen 50 versehen. Der Grundkörper 41 selber kann auch mit Ausrundungen 51 in den Eckbereichen versehen sein.

Der Einsatz des Seilankers 40 ist in den weiteren Figuren 11 bis 13 illustriert.

Folgende Anmerkungen seien zu den beschriebenen Elementen noch angebracht, insbesondere mit Blick auf spezielle Ausführungsformen der vorgeschlagenen Lösung (was namentlich die Dimensionierung anbelangt) sowie zwecks Zusammenfassung der vorgeschlagenen Lösung:
Betreffend den Stützenfuß 11 wird durch diesen anstelle üblicher Fußplatten von Stützen das beschriebene Pfosten-Aufnahmeelement (für den Stützenkopf 20) bereitgestellt.

Der Stützenfuß 11 wird je nach Art des Untergrundes und der zutreffenden Belastung entweder mit zwei Verbindungselementen 16, 17 (Ankerbolzen/ Dübeln) oder auch nur mit einem solchen am tragfähigen Untergrund befestigt.

Der Stützenfuß 11 besteht bevorzugt aus der oval geformten Grundplatte 12 mit den Hauptabmessungen 101 mm x 120 mm bei einer Dicke von 11 mm.

Die Grundplatte 12 enthält die wellenförmig ausgebildete zweite Ausnehmung 15, die bevorzugt als 14 mm breite Einschiebe-Öffnung gestaltet ist, mit der der Stützenfuß 11 in einen zuvor gesetzten Dübelanker 16 eingefädelt werden kann. Zusätzlich enthält die Grundplatte 12 auch noch die erste Ausnehmung 14 in Form einer Langlochbohrung mit 13 mm x 17 mm Abmessung, passend für Schrauben, Bolzen, Dübel bzw. Gewindestangen 17 mit einem Durchmesser von 12 mm.

Die vier schräg nach oben verlaufende Stützen 18 mit einer Breite von 13 mm und einer Dicke von 9 mm verbinden die Grundplatte 12 mit der darüber liegenden Anschlussplatte 13. Diese hat einen Außendurchmesser von 58 mm bei einer Materialstärke von 5 mm. Sie enthält die drei in einer Reihe liegenden Bohrungen 19a, 19b, 19c mit einem Durchmesser von 7 mm zur Befestigung der Stütze 60 und des auf dieser angeordneten Stützenkopfes 20.

Die Bauhöhe des Stützenfußes beträgt beispielsweise 51 mm.

Natürlich können entsprechend der erforderlichen Anpassung an bauseitige oder sonstige Bedingungen die genannten Abmessungen den jeweiligen Gegebenheiten und statischen Erfordernissen angepasst werden.

Der beschriebene Stützenkopf 20 dient zunächst in erster Linie als Aufsatzteil auf die Stütze 60. Allerdings kann er auch in vorteilhafter Weise als Wandanker oder als Einzel-Anschlagspunkt verwendet werden.

Der Stützenkopf 20 besitzt eine kreisrunde Basisplatte 21 mit der Ausnehmung 27 in Form einer Langlochbohrung. Somit kann der Stützenfuß 11 mittels der Ausnehmung 19a mit der Stütze 60 verschraubt werden und die Stütze 60 ihrerseits mit dem Stützenkopf 20 mittels der Ausnehmung 27 (s. die Zusammenschau der Figuren 3 bzw. 4 mit Figur 11 bzw. 13; s. hierzu auch das Verbindungselement 28 in Figur 11).

Die dreidimensional geformte Wandung 24 mit der Ausnehmung 25 in Form einer Langlochöffnung verbindet die Basisplatte 21 mit dem zur Seilführung zum Einsatz kommenden Rohrelement 22.

Wie in Figur 7 zu erkennen ist, wird das durchzuführende Sicherungsseil 23 (Stahlseil) mit einem Durchmesser von beispielsweise 8 mm mittels der beiden Madenschrauben 31a, 31b mit einem Durchmesser von beispielsweise 8 mm in den hierfür vorgesehenen Gewindebohrungen 29a und 29b zugfest in seiner Lage gesichert.

Auf der gegenüberliegenden Seite befindet sich die Kontrollöffnung 30, durch die eine ordnungsgemäße Seilbefestigung kontrolliert werden kann.

Den oberen Abschluss des Stützenkopfes 20 bildet das Rohrelement 22 (Führungsrohr), durch das das beispielsweise 8 mm dicke Sicherungsseil 23 geführt ist. Dieses kann auf zweierlei Art am Stützenkopf 20 kraftschlüssig fixiert werden.

Zum einen kommt die bereits beschriebene Fixierung mittels der Madenschrauben 31a, 31b zum Einsatz. Alternativ (und gegebenenfalls auch additiv) kann auch eine Pressung der beiden Rohrenden mittels einer (nicht dargestellten) Presszange erfolgen, an der die erforderliche Presskraft eingestellt werden kann, um die benötigte Verformung des Rohelements 22 zu erreichen und so das Sicherungsseil 23 zu klemmen.

In vorteilhafter Weise kann der beschriebene Stützenkopf aber auch anderweitig verwendet werden, indem er gemäß den Figuren 8 und 9 zum Einsatz kommt. Gemäß Figur 8 ist zu erkennen, dass durch die Ausnehmung in der Wandung 24 ein Verbindungselement 26 eingehakt werden kann, in welches sich ein Benutzer mittels Karabiner seiner eigenen persönlichen Schutzausrüstung (PSA) einhängen und sichern kann. Ferner ist der Einsatz als Wandanker möglich, wie es Figur 9 zeigt. Hiernach wird der Stützenkopf mittels eines (in Figur 9 nicht zu erkennenden) Verbindungselements an einer Wand festgelegt. Der Stützenkopf bildet dann einen Einzelanschlagspunkt.

Am Anfang und am Ende eines jeden Seilsystems wird ein Endstück (Anker) benötigt, welcher verhindert, dass ein zur Absturzsicherung notwendiges Drahtseil durch den jeweiligen Stützenkopf hindurchrutscht und dass insbesondere der erste und der letzte überfahrbare Stützenkopf durch den Seilanker als Anfangs- und Endpunkt eines Seilsystems gesichert ist. Der Seilanker 40 ist in den Figuren 10 bis 13 zu sehen.

Der Grundkörper 41 des Seilankers 40 weist - als Würfel ausgebildet - eine Kantenlänge von beispielsweise 29 mm auf.

Die beiden zueinander rechtwinkelig verlaufenden, zylinderförmigen Aussparungen, nämlich die erste Durchtrittsbohrung 42 und die zweite Durchtrittsbohrung 44, ermöglichen die Durchführung und Umlenkung des Sicherungsseil 23 um 90° bzw. 270°, welches mit den beiden Madenschrauben 48 und 49 mit einem Durchmesser von beispielsweise 6 mm in der Lage gesichert wird.

In Verbindung mit dem beschriebenen Stützenkopf 20 ergibt sich an einem Kreuzungspunkt des Absturz-Sicherungs-Systems die Möglichkeit eines Richtungswechsels des Seils, wie es aus Figur 13 hervorgeht, wobei ein erster Seilstrang in einen zweiten übergeht.

Dies stellt in der Handhabung eine deutliche Montageerleichterung dar, wobei gleichzeitig die Möglichkeit einer fehlerhaften Montage wesentlich reduziert wird. Infolge der Einfachheit des Systems werden die vorgeschriebenen jährlichen Kontrollen der Absturz-Sicherungs-Systeme erleichtert.

### Bezugszeichenliste:

- 11: Stützenfuß
- 12: Grundplatte
- 13: Anschlussplatte
- 14: erste Ausnehmung
- 15: zweite Ausnehmung
- 16: Verbindungselement
- 17: Verbindungselement
- 18: Stütze
- 18a: Verbindungsstruktur
- 18b: Durchbruch in der Verbindungsstruktur
- 19a: Ausnehmung (Bohrung)
- 19b: Ausnehmung (Bohrung)
- 19c: Ausnehmung (Bohrung)

- 20: Stützenkopf
- 21: Basisplatte
- 22: Rohrelement
- 23: Sicherungsseil
- 24: Wandung
- 25: Ausnehmung in der Wandung
- 26: Verbindungselement (Rechteckring)
- 27: Ausnehmung in der Basisplatte
- 28: Verbindungselement
- 29a: Gewindebohrung
- 29b: Gewindebohrung
- 30: Kontrollöffnung
- 31a: Madenschraube
- 31b: Madenschraube

- 40: Seilanker
- 41: Grundkörper
- 42: erste Durchtrittsbohrung
- 43: erste Oberfläche des Grundkörpers
- 44: zweite Durchtrittsbohrung
- 45: zweite Oberfläche des Grundkörpers
- 46: erste Gewindebohrung
- 47: zweite Gewindebohrung
- 48: Madenschraube
- 49: Madenschraube
- 50: Ausrundung
- 51: Ausrundung

- 60: Stütze

- A: Achse der Gewindebohrung
- L: Längsachse des Rohrelements
- B: Achse der ersten Gewindebohrung
- C: Achse der zweiten Gewindebohrung
- D: Achse der ersten Durchtrittsbohrung
- E: Achse der zweiten Durchtrittsbohrung

- α: Winkel zur Vertikalen
- V: Vertikale / Oberflächennormale auf der Grundplatte 12
- a: Längsachse der Stütze 18

## Patentansprüche

1. Seilanker (40) einer Seilhaltevorrichtung, umfassend
- einen quaderförmigen Grundkörper (41),
- eine erste Durchtrittsbohrung (42) für ein Sicherungsseil (23), die in eine erste Oberfläche (43) des Grundkörpers (41) eingearbeitet ist,
- eine zweite Durchtrittsbohrung (44) für das Sicherungsseil (23), die in eine zweite Oberfläche (45) des Grundkörpers (41) eingearbeitet ist, wobei die zweite Oberfläche (45) von der ersten Oberfläche (43) verschieden ist und wobei sich die beiden Durchtrittsbohrungen (42, 44) nicht schneiden,
- eine erste Gewindebohrung (46), die in den Grundkörper (41) eingearbeitet ist und deren Achse (B) die Achse (D) der ersten Durchtrittsbohrung (42) rechtwinkelig schneidet, und
- eine zweite Gewindebohrung (47), die in den Grundkörper (41) eingearbeitet ist und deren Achse (C) die die Achse (E) der zweiten Durchtrittsbohrung (44) rechtwinkelig schneidet.

2. Seilanker nach Anspruch 1, **dadurch gekennzeichnet, dass** der quaderförmige Grundkörper (41) als Würfel ausgebildet ist.

3. Seilanker nach Anspruch 1 oder 2, **dadurch gekennzeichnet, dass** die Durchtrittsbohrungen (42, 44) eine zylindrische Form aufweisen.

4. Seilanker nach einem der Ansprüche 1 bis 3, **dadurch gekennzeichnet, dass** alle Seitenlängen des quaderförmigen Grundkörpers (41) zwischen 20 mm und 40 mm, vorzugsweise zwischen 25 mm und 35 mm liegen.

5. Seilanker nach einem der Ansprüche 1 bis 4, **dadurch gekennzeichnet, dass** in den Gewindebohrungen (46, 47) zur Fixierung des Sicherungsseils (23) Madenschrauben (48, 49) eingeschraubt sind.

6. Seilanker nach einem der Ansprüche 1 bis 5, **dadurch gekennzeichnet, dass** der Übergang von der Oberfläche (43, 45) in die Durchtrittsbohrung (42, 44) mit einer Ausrundung (50) versehen ist.

7. Seilanker nach einem der Ansprüche 1 bis 6, **dadurch gekennzeichnet, dass** die Eckenbereiche des Grundkörpers (41) mit Ausrundungen (51) versehen sind.

8. Seilanker nach einem der Ansprüche 1 bis 7, **dadurch gekennzeichnet, dass** der Grundkörper (41) aus hochfestem Material besteht, insbesondere aus korrosionsfreiem Edelstahl.
